# EUROPÄISCHE PATENTSCHRIFT

(11) **EP 1 529 182 B1**
(45) Veröffentlichungstag und Bekanntmachung des Hinweises auf die Patenterteilung: **23.04.2008**
(21) Anmeldenummer: 03708225.2
(22) Anmeldetag: 13.03.2003
(51) Int. Cl.: F23N 5/08, G05B 13/02, F23G 5/50

(54) **VERFAHREN ZUR ÜBERWACHUNG EINES THERMODYNAMISCHEN PROZESSES**
METHOD FOR MONITORING A THERMODYNAMIC PROCESS
PROCEDE POUR CONTROLER UN PROCESSUS THERMODYNAMIQUE

(30) Priorität: 16.08.2002 EP 02018427
(43) Veröffentlichungstag der Anmeldung: 11.05.2005
(73) Patentinhaber: Powitec Intelligent Technologies GmbH, 45219 Essen (DE)
(72) Erfinder: STEPHAN, Volker, 99976 Hüpstedt (DE); WINTRICH, Franz, 45309 Essen (DE)
(74) Vertreter: Patentanwälte Hosenthien-Held und Dr. Held
(86) Internationale Anmeldenummer: PCT/EP2003/002582
(87) Internationale Veröffentlichungsnummer: WO 2004/018940

(56) Entgegenhaltungen:
- DE-A- 19 710 206
- US-A- 5 971 747
- US-A1- 2001 014 436
- US-B1- 6 278 374
- SBARBARO D ET AL: "Monitoring and characterization of combustion flames by generalized Hebbian learning" , PROCEEDINGS OF THE 2002 INTERNATIONAL JOINT CONFERENCE ON NEURAL NETWORKS. IJCNN'02. HONOLULU, HAWAII, MAY 12 - 17, 2002, INTERNATIONAL JOINT CONFERENCE ON NEURAL NETWORKS, NEW YORK, NY: IEEE, US, VOL. VOL. 1 OF 3, PAGE(S) 82-85 XP010590771 ISBN: 0-7803-7278-6 Seite 83 -Seite 84
- NIEMI A J ET AL: "Image analysis and vision systems for processing plants" , INTELLIGENT PROCESSING AND MANUFACTURING OF MATERIALS, 1999. IPMM '99. PROCEEDINGS OF THE SECOND INTERNATIONAL CONFERENCE ON HONOLULU, HI, USA 10-15 JULY 1999, PISCATAWAY, NJ, USA,IEEE, US, PAGE(S) 11-20 XP010351610 ISBN: 0-7803-5489-3 Seite 12, Zeile 32 - Zeile 35
- BERTUCCO L ET AL: "A cellular neural networks approach to flame image analysis for combustion monitoring" , PAGE(S) 455-459 XP010517433 das ganze Dokument

## Beschreibung

Die Erfindung betrifft ein Verfahren zur Überwachung eines thermodynamischen Prozesses mit den Merkmalen des Oberbegriffs des Anspruches 1.

Bei einem bekannten Verfahren werden zur Bildauswertung zunächst be stimmte Merkmale definiert, die dem Betreiber der Anlage zur Modellierung des Prozesses vielversprechend erscheinen. Beispielsweise werden bestimmte Momente definiert und das Bildmaterial dann auf dieses - notgedrungen reduzierte - Funktionensystem abgebildet. Die ausgewählten Merkmale - und nur diese - werden dann untersucht und zur Schaffung eines Prozessmodells verwendet. Möglicherweise werden dabei die im Bildmaterial vorhandenen Informationen nur teilweise extrahiert und verwendet.

In dem Artikel Sbarbao et al: "Monitoing and characterization of combustion flames by generalized Hebbian learning", Proceedings of the 2002 International joint conference on neural networks, IJCNN'02, Honolulu, Hawai, May 12-17, 2002, International joint conference on neural networks, New York, NY: IEEE, US, Vol. 1 of 3, pages 82-85, XP010590771, ISBN: 0-7803-7278-6 wird die Flamme eines Gasbrenners mit einem Eigenwertansatz untersucht und die sechs größten Eigenwerte (Eigenflames) ermittelt. Bereits mit den beiden größten Eigenwerten lassen sich brauchbare Ergebnisse erzielen.

Der vorliegenden Erfindung liegt die Aufgabe zugrunde, ein Verfahren der ein - gangs genannten Art zu verbessern, insbesondere mehr Informationen für den Eigenwertansatz zu berücksichtigen. Diese Aufgabe wird durch ein Verfahren mit den Merkmalen des Anspruches 1 gelöst. Weitere vorteilhafte Ausgestaltungen sind Gegenstand der Unteransprüche.

Der typische thermodynamische Prozess dient der Umsetzung von Gut, wobei mittels eines wenigstens eine Flamme aufweisenden Verbrennungsvorganges die nö - tige Temperatur erzeugt und aufrecht erhalten wird. Eine gleichzeitige Erfassung der Flamme und des Gutes im Bildmaterial, d.h. der Strahlungs-Emissionen von Flamme und Gut, hat den Vorteil, dass Informationen über die Wechselwirkungen von Flamme und Gut auf eine einzigartige Weise erhältlich sind. Es kann dann eine ganze Szenenbeschreibung der Bildauswertung unterworfen werden. Das Umfeld der Flamme wird vorzugsweise komplettiert, indem auch die Wände des Verbrennungsraumes mit aufgenommen werden, d.h. deren Emissionen.

Indem bei der Bildauswertung ein Eigenwertproblem als Ansatz zugrunde gelegt wird, zumindest für den größten Teil des hochdimensionalen Bildraumes, kann in den Bildern enthaltene Information ohne nennenswerten Informationsverlust in einen niederdimensionalen Raum transformiert werden, um dann ausgewertet zu werden. Die Bilder werden dann durch charakteristische Bildmerkmale ("Eigenflames") dargestellt, welche sich aus dem Eigenwertproblem ergeben. Die Bildauswertung erfolgt automatisch, da der Auswertungsansatz dem System innewohnt und nicht von Merkmalen abhängt, welche der Betreiber der Anlage aus wählt. Vorzugsweise werden singuläre Ereignisse, welche den Prozess merklich beeinflussen können, bei der Lösung des Eigenwertproblems berücksichtigt, so dass diese in späteren Bildauswertungen schneller identifiziert werden können. Durch einen Ansatz mit Bildmaterial von unterschiedlichen Zeitpunkten berücksichtigt das Eigenwertproblem zeitliche Entwicklungen.

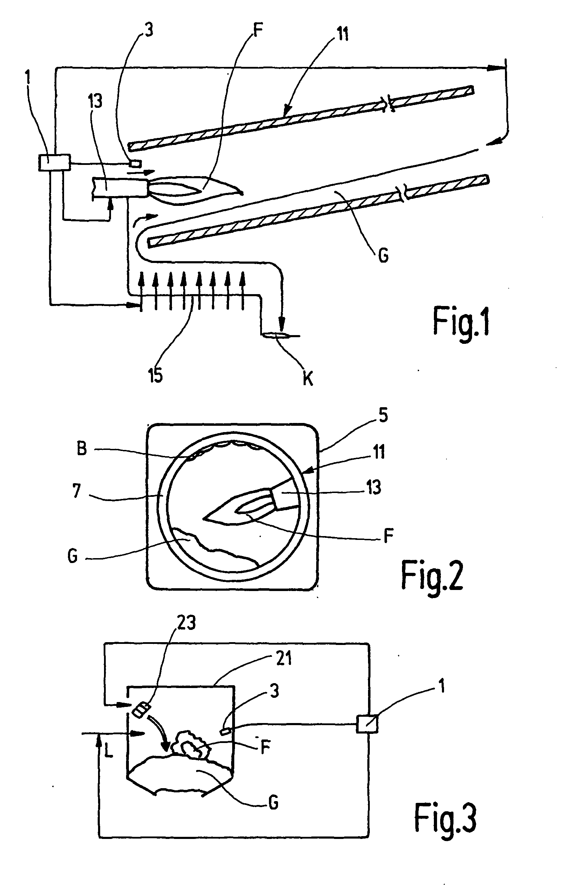

Im folgenden ist die Erfindung anhand dreier in der Zeichnung dargestellter Ausführungsbeispiele näher erläutert. Es zeigen
- Fig. 1: eine teilweise geschnitten dargestellte Prinzipskizze einer Anlage zur Herstellung von Zement gemäß einem ersten Ausführungsbeispiel,
- Fig. 2: ein vereinfacht dargestelltes Kamerabild der Anlage von Fig. 1,
- Fig. 3: eine schematische Darstellung einer Anlage zur Müllverbrennung gemäß einem zweiten Ausführungsbeispiel,

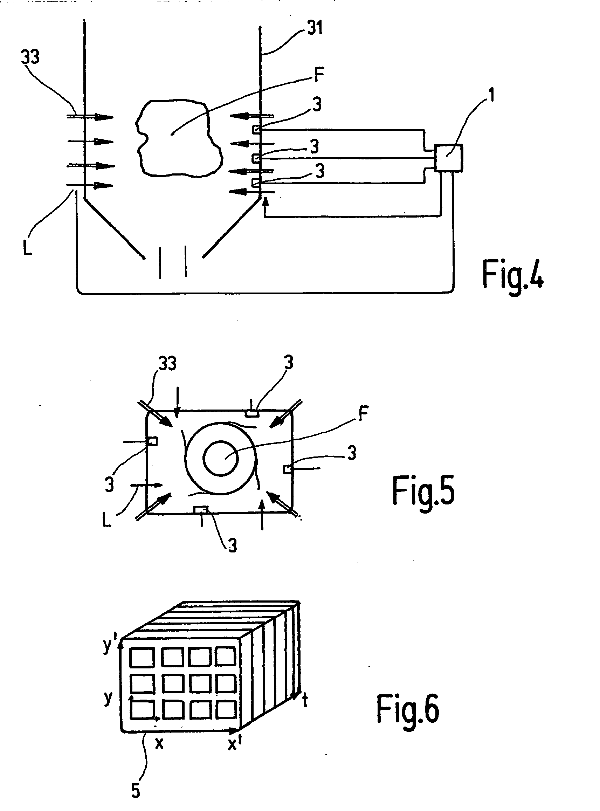

- Fig. 4: eine schematische Darstellung einer Ofens einer Kraftwerksanlage gemäß einem dritten Ausführungsbeispiel im Längsschnitt,
- Fig. 5: ein entsprechender horizontaler Querschnitt, und
- Fig. 6: eine schematische Darstellung des Bildmaterials des dritten Ausführungsbeispiels.

In allen drei Ausführungsbeispielen läuft in einer Anlage ein thermodynamischer Prozeß ab, bei dem wenigstens teilweise brennbares Gut G unter Zufuhr von Luft L einer Oxidation unterzogen wird, wobei wenigstens eine Flamme F vorhanden ist. Der thermodynamische Prozeß soll überwacht und dann so geregelt werden, daß er einerseits eine gewisse Stabilität und andererseits eine gewisse Plastizität aufweist, d.h. sich den Gegebenheiten anpaßt, wobei gewisse Optimierungsziele bestehen. Der Zustand in der Anlage wird beschrieben durch verschiedene Prozeßgrößen, von denen manche zugleich Stellgrößen bilden. Durch Aktionen, d.h. Änderungen von Stellgrößen, wird der Zustand in der Anlage geändert. Für die online-Überwachung und -Regelung und Vorhersagen über künftige Zustände der Anlage ist auf einer Datenverarbeitungsanlage 1 ein neuronales Netz implementiert.

Mittels wenigstens einer Kamera 3 wird der thermodynamische Prozeß bildlich erfasst. Die Kamera 3 ist so eingestellt, daß sie sowohl die Flamme F als auch das brennende Gut G aufnimmt, vorzugsweise auch die Wände 7 des Verbrennungsraumes mit gegebenenfalls vorhandenen Verbackungen B, also die Emissionen des gesamten Umfelds. Das von der Kamera 3 erzeugte Bildmaterial 5 enthält also eine ganze Szenenbeschreibung, welche auch die Wechselwirkung zwischen Flamme F und Gut G erfasst. Das Bildmaterial 5 wird der Datenverarbeitungsanlage 1 zugeführt, wobei einerseits ein Video-Livebild angezeigt wird und andererseits aus der Information im Bildmaterial 5 einige Prozeßgrößen ermittelt werden.

Um die Information im Bildmaterial 5 ohne nennenswerten Informationsverlust sinnvoll verarbeiten zu können, d.h. aufgrund der Komplexität zunächst in einen niederdimensionalen Raum transformieren zu können, wird - zumindest größtenteils - ein Eigenwertproblem als Ansatz gewählt, d.h. eine Art Hauptachsentransformation (Principal Component Analysis) versucht. Jedes Bild wird dann durch eine im allgemeinen kleine Menge von skalaren Eigenwerten (meist weniger als 20, beispielsweise acht), d.h. transformierten Koordinaten im neuen Koordinatensystem, und vektoriellen "Eigenbilder" oder "Eigenflames", d.h. Koordinatenachsen für das neue Koordinatensystem beschrieben, wobei die eigenwertgrößten Eigenflames systemgemäß dominieren. Der Begriff Eigenflames ist weit auszulegen, da nicht nur die Emissionen der Flamme F, sondern auch des Gutes G einbezogen werden.

In einer klassischen Hauptachsentransformation müßten die Nullstellen des charakteristischen Polynoms der Kovarianzmatrix berechnet werden. Um das System von orthonormalen Eigenflames zu erhalten, kann aber alternativ ein stochastisches Approximationsverfahren auf einem neuronalen Netz verwendet werden, bei dem zunächst die Wichtungen aller Neuronen zufällig initialisiert und dann mit dem Bildmaterial zunächst die Wichtungen des ersten Neurons iterativ adaptiert werden, dann des zweiten Neurons etc.

Die Eigenflames ergeben sich weitgehend als kompakte Regionen, da benachbarte Pixel auch benachbarte Raumwinkel im Verbrennungsraum beobachten, deren Lichtemissionen stark korrelieren. Aus der Menge aufgenommener Bilder werden - außer einigen durchschnittlichen Helligkeitsverteilungen - auch singuläre Ereignisse als Ansatz von Eigenflames für das Eigenwertproblem ausgewählt, wie beispielsweise eine abrupte Zufuhr von neuem Gut G.

Mit den aus dem - zumindest größtenteils gelösten - Eigenwertproblem ermittelbaren Prozeßgrößen wird im neuronalen Netz ein Prozeßmodell geschaffen, mit dem genauere Vorhersagen gemacht werden können. Ein singuläres Ereignis wird mit diesem Ansatz rasch erkannt, so daß dann verschiedene zusätzliche Messungen gestartet werden können, um mehr Information über den aktuellen Zustand des Prozesses nach dem singulären Ereignis zu erhalten.

Da die Bildauswertung nicht mehr von einer festgelegten Merkmalsauswahl abhängt, sondern sich selbst passende Information aus dem Bildmaterial 5 extrahiert, kann die Bildauswertung automatisiert werden. Zudem ist die Gefahr, daß relevante Informationen im Bildmaterial 5 nicht beachtet werden, deutlich reduziert. Die gleichzeitige Berücksichtigung von Emissionen des Gutes G im Bildmaterial 5 liefert Informationen, die mit ihrer Wechselwirkung zur Flamme F auf keine andere Weise erhält ist. Durch den gewählten Ansatz mit Bildmaterial 5 von unterschiedlichen Zeitpunkten berücksichtigt das Eigenwertproblem zeitliche Entwicklungen.

Das erste Ausführungsbeispiel betrifft einen Drehrohrofen 11 zur Zementherstellung, der in an sich bekannter Weise betrieben wird. Die Kamera 3 ist in den Innenraum des Drehrohrofens 11 gerichtet und nimmt das Bild der Flamme F eines Brennes 13, das in Umsetzung befindliche Gut G sowie die Wände 7 mit Verbackungen B auf. Die Datenverarbeitungsanlage 1 unterzieht das Bildmaterial 5 der Kamera 3 dem beschriebenen Eigenwertansatz. Das neuronale Netz erhält außer den komprimierten Daten noch Informationen über die Massenströme der über verschiedene Wege zugeführten Luft L, des Brennstoffs und des Gutes G. Das Optimierungsziel ist zum einen ein hoher FCAO-Wert des entstehenden Klinkers K, wobei dieser FCAO-Wert nicht nur durch den Zustand im Drehrohrofen 11, sondern auch durch die Umstände auf der Abkühlstrecke 15 bestimmt wird. Zum anderen soll die Mischung des Brennstoffs so eingestellt werden, daß möglichst viel Sekundärbrennstoff, d.h. Abfälle, verbraucht wird. Schließlich sollen noch die Verbackungen B der Wände 7 des Drehrohrofens 11 gering gehalten werden.

Das zweite Ausführungsbeispiel betrifft einen Müllverbrennungsofen 21. Auch hier nimmt die Kamera 3, vorzugsweise mehrere Kameras, das Bild von Flamme F und Gut G gemeinsam als Szene auf. In einer Spezialausführung zur Sondermüllverbrennung werden in gewissen Abständen Müllbehälter 23 mit Sondermüll in den Müllverbrennungsofen 21 geworfen, Das Aufplatzen eines solchen Müllbehälters 23 aufgrund der hohen Temperatur ist ein singuläres Ereignis, daß mit dem erfindungsgemäßen Eigenwertansatz rasch erkannt wird. Es können dann verschiedene zusätzliche Messungen gestartet werden können, wie beispielsweise eine Probenentnahme, um mehr Information über den aktuellen Zustand des Prozesses nach diesem singulären Ereignis zu erhalten. Vorzugsweise wird mit dem Öffnen der Klappe zum Einwerfen des Müllbehälters 23 eine Highspeedkamera gestartet, die kurz vor und nach dem singulären Ereignis zusätzliches, zeitlich dichteres Bildmaterial 5 liefert.

Das dritte Ausführungsbeispiel betrifft eine Kraftwerksanlage, bei der einem Ofen 31 außer der Luft L noch Brennmaterial 33, beispielsweise gemahlene Kohle, über die Ecken des Ofens 31 durch Doppelpfeile angedeutet zugeführt wird. Innerhalb des Ofens 31 bildet sich eine riesige, rotierende Flamme F aus. Mehrere Kameras 3 sind beispielsweise in drei verschiedenen Höhen auf jeder Seite des Ofens 31 angeordnet. Jede Kamera 3 nimmt die Flamme F sowie den Zufuhrbereich des Brennmaterials 33 in einer Szene auf, da insbesondere der Eintritt des Brennmaterials 33 in die Flamme F interessante Informationen liefert, weil in der Regel beim Brennmaterial 33 - im Gegensatz zur Luft L - nur der Gesamtmassenstrom aus der Kohlemühle und nicht die Teilströme der einzelnen Zufuhrbereiche gemessen werden kann. Das Bildmaterial 5 weist die zu einem x'-y'-Momentanbild zusammengefassten zweidimensionalen x-y-Einzelbilder der Kameras 3 zu verschiedenen Zeitpunkten t auf, also ein dreidimensionales Feld. Das Bildmaterial 5, das also - wie auch in den anderen Ausführungsbeispielen - quasi dreidimensional ist, wird dem beschriebenen Eigenwertansatz unterzogen.

## Patentansprüche

1. Verfahren zur Überwachung eines thermodynamischen Prozesses in einer Anlage, bei dem mittels wenigstens einer Kamera (3) der thermoynamische Prozess erfasst und Bildmaterial (5) des Prozesses erzeugt wird und das Bildmaterial (5) einer automatisch erfolgenden Bildauswertung unterzogen wird, bei der zumindest größtenteils ein Eigenwertproblem als Ansatz zugrunde gelegt wird und das Bildmaterial (5) zumindest weitgehend durch Eigenflames und transformierte Koordinaten dargestellt wird, **dadurch gekennzeichnet, dass** die Kamera (3) die Emissionen sowohl wenigstens einer Flamme (F) des thermodynamischen Prozesses als auch von Gut (G), welches mit dem thermodynamischen Prozeß umzusetzen ist, gleichzeitig aufnimmt und das von der Kamera erzeugte Bildmaterial (5) eine ganze Szenenbeschreibung enthält, welche auch die Wechselwirkung zwischen Flamme (F) und Gut (G) erfasst, wobei die ganze Szenenbeschreibung der Bildauswertung unterworfen wird, bei welcher zur Berechnung der Eigenflames sowohl die Emissionen der Flamme (F) als auch des Gutes (G) einbezogen werden.

2. Verfahren nach Anspruch 1, **dadurch gekennzeichnet, dass** mit dem Bildmaterial (5) auch die Emissionen der Wände (7) des Verbrennungsraumes (11,21,31) erfasst werden.

3. Verfahren nach Anspruch 1 oder 2, **dadurch gekennzeichnet, dass** das dem Eigenwertansatz zu unterwerfende Bildmaterial die zu einem Momentanbild (x', y') zusammengefassten Einzelbilder (x, y) zu verschiedenen Zeitpunken (t) als ein dreidimensionales Feld aufweist.

4. Verfahren nach einem der vorherigen Ansprüche, **dadurch gekennzeichnet, dass** auch singuläre Ereignisse als Ansatz für Eigenflames gewählt werden.

5. Verfahren nach einem der vorhergehenden Ansprüche, **dadurch gekennzeichnet, dass** der thermodynamische Prozeß in einem Drehrohrofen (11) einer Zementherstellungsanlage, einem Müllverbrennungsofen (21) oder einem Ofen (31) eines Kraftwerks als Anlage stattfindet.

6. Verfahren nach Anspruch 4 und 5, **dadurch gekennzeichnet, dass** das Aufplatzen eines Müllbehälters (23) in einem Müllverbrennungsofen (21) ein singuläres Ereignis ist.

7. Verfahren nach einem der vorhergehenden Ansprüche, **dadurch gekennzeichnet, dass** aus der Bildauswertung Prozeßgrößen ermittelt, mit Optimierungszielen verglichen und zur Regelung des Prozesses geeignete Aktionen durchgeführt werden.

8. Vorrichtung angepasst zur Durchführung eines Verfahrens nach einem der vorherge - henden Ansprüche, mit wenigstens einer Kamera (3) zur Erzeugung des Bildmaterials (5), welche die Flamme (F) und das Gut (G) in einer Szene aufnimmt, und einer Datenverarbeitungsanlage (1) zur automatischen Bildauswertung.

9. Vorrichtung nach Anspruch 8, **dadurch gekennzeichnet, dass** auf der Datenver - arbeitungsanlage (1) ein neuronales Netz implementiert ist.

## Claims

1. Method for monitoring a thermodynamic process in an installation, in which at least one camera (3) captures the thermodynamic process and image material (5) of the process is produced and the image material (5) is subjected to an automatic image evaluation, in which at least for the most part an eigen value problem approach is used and the image material (5) is at least largely represented by eigen flames and transformed coordinates, **characterised in that** the camera (3) simultaneously records the emissions both from at least one flame (F) of the thermodynamic process and also from material (G) that is to be transformed through the thermodynamic process, and the image material (5) produced by the camera contains a whole scene description, which also captures the interaction between flame (F) and material (G), wherein the whole scene description is subjected to the image evaluation, in which to calculate the eigen flames both the emissions from the flame (F) and from the material (G) are included.

2. Method according to claim 1, **characterised in that**, together with the image material (5), the emissions from the walls (7) of the combustion chamber (11, 21, 31) are also captured.

3. Method according to claim 1 or 2, **characterised in that** the image material to be subjected to the eigen value approach comprises the individual images (x, y) combined to an instantaneous image (x', y') at different times (t) as a three-dimensional field.

4. Method according to any one of the preceding claims, **characterised in that** singular events can also be selected as an approach for eigen flames.

5. Method according to any one of the preceding claims, **characterised in that** the installation in which the thermodynamic process takes place is a rotary kiln (11) of a cement plant, a waste incinerator (21) or a furnace (31) of a power station.

6. Method according to claims 4 and 5, **characterised in that** bursting of a waste container (23) in a waste incinerator (21) is a singular event.

7. Method according to any one of the preceding claims, **characterised in that** process parameters are determined from the image evaluation and compared with optimisation targets and actions suitable for regulating the process are carried out.

8. Device adapted for carrying out a method according to any one of the preceding claims, having at least one camera (3) for producing the image material (5), which captures the flame (F) and the goods (G) in one scene, and a data processing unit (1) for automatic image evaluation.

9. Device according to claim 8, **characterised in that** a neural network is implemented in the data processing unit (1).

## Revendications

1. - Procédé destiné au contrôle d'un processus thermodynamique dans une installation, dans laquelle le processus thermodynamique est détecté au moyen d'au moins une caméra (3), et le matériel graphique (5) du processus est produit, et le matériel graphique (5) est soumis à une exploitation photographique automatique, au cours de laquelle un problème des valeurs propres est pris au moins en grande partie comme point de départ, et le matériel graphique (5) est représenté au moins largement par des flammes propres et des coordonnées transformées, **caractérisé par le fait que** la caméra (3) enregistre simultanément les émissions non seulement d'au moins une flamme (F) du processus thermodynamique, mais encore du matériau (G) qui doit être transformé par le processus thermodynamique, et le matériel graphique (5) produit par la caméra contient une description des scènes complète qui détecte également l'interaction entre la flamme (F) et le matériau (G), la description des scènes complète étant soumise à l'exploitation photographique, dans laquelle non seulement les émissions de la flamme (F), mais encore le matériau (G) sont inclus pour calculer la flamme propre.

2. - Procédé selon la revendication 1, **caractérisé par le fait que** les émissions des parois (7) de la chambre de combustion (11, 21, 31) sont également détectées avec le matériel graphique (5).

3. - Procédé selon l'une des revendications 1 ou 2, **caractérisé par le fait que** le matériel graphique devant être soumis à la base des valeurs propres comprend les images individuelles (x, y) réunies en une image momentanée (x', y') à différents moments (t) en tant que champ tridimensionnel.

4. - Procédé selon l'une quelconque des revendications précédentes, **caractérisé par le fait que** des événements singuliers sont sélectionnés comme point de départ pour la flamme propre.

5. - Procédé selon l'une quelconque des revendications précédentes, **caractérisé par le fait que** le processus thermodynamique a lieu dans un four rotatif (11) d'une installation de cimenterie, un four d'incinération des déchets (21) ou un four (31) d'une centrale électrique servant d'installation.

6. - Procédé selon les revendications 4 et 5, **caractérisé par le fait que** l'éclatement d'un réservoir de déchets (23) dans un four d'incinération des déchets (21) est un événement singulier.

7. - Procédé selon l'une quelconque des revendications précédentes, **caractérisé par le fait que** des grandeurs de processus sont déterminées à partir de l'exploitation photographique, sont comparées à des objectifs d'optimisation, et des actions adaptées sont exécutées à des fins de régulation du processus.

8. - Dispositif adapté à l'exécution d'un procédé tel que défini à l'une quelconque des revendications précédentes, avec au moins une caméra (3) destinée à produire le matériel graphique (5), qui enregistre la flamme (F) et le matériau (G) dans une scène, et avec une installation de traitement des données (1) à des fins d'exploitation photographique automatique.

9. - Dispositif selon la revendication 8, **caractérisé par le fait qu'**un réseau neuronal est implémenté sur l'installation de traitement des données (1).
